# EUROPÄISCHE PATENTSCHRIFT

(11) **EP 3 566 570 B1**
(45) Veröffentlichungstag und Bekanntmachung des Hinweises auf die Patenterteilung: **24.02.2021**
(21) Anmeldenummer: 19171180.3
(22) Anmeldetag: 25.04.2019
(51) Int. Cl.: A01K 5/00, A01F 25/20, A01K 5/02

(54) **VORRICHTUNG ZUR ENTNAHME VON FUTTER**
DEVICE FOR EXTRACTING FOOD
DISPOSITIF DE RETRAIT DE FOURRAGE

(30) Priorität: 09.05.2018 AT 503912018; 08.11.2018 AT 509572018
(43) Veröffentlichungstag der Anmeldung: 13.11.2019
(73) Patentinhaber: Wasserbauer GmbH, 4595 Waldneukirchen (AT)
(72) Erfinder: Wasserbauer, Franz, 4595 Waldneukirchen (AT)
(74) Vertreter: KLIMENT & HENHAPEL

(56) Entgegenhaltungen:
- WO-A1-2013/157931
- WO-A1-2017/069614
- NL-B1- 2 015 654
- US-A- 2 724 481

## Beschreibung

### GEBIET DER ERFINDUNG

Die Erfindung betrifft eine Vorrichtung zur Entnahme von Futter aus einem Futterlager umfassend eine Trenneinrichtung zum Abtrennen von Futter vom Futterlager, die ein auf einem verfahrbaren Gerüst angeordnetes Trennwerkzeug umfasst, eine mit dem Gerüst mitbewegte Fördereinrichtung zur Förderung von abgetrenntem Futtermaterial von einem an der Trenneinrichtung angeordneten Aufgabebereich der Fördereinrichtung zu einem mit dem Gerüst mitbewegten Abgabebereich der Fördereinrichtung, sowie einen zur Befüllung mit abgetrenntem Futtermaterial in einer Befüllposition im Abgabebereich der Fördereinrichtung vorgesehenen Transportbehälter, gemäß dem Oberbegriff von Anspruch 1.

### STAND DER TECHNIK

Zur Fütterung von Viehbeständen ist es erforderlich Futter wie beispielsweise Silage, Grundfutter oder Heu aus einem Futterlager zu entnehmen, einem Mischbehälter zuzuführen und das abgetrennte und gemischte Futter zum Futtergang zu transportieren, wo die Futterablage erfolgt.

In der DE 201 05 747 U1 wird ein Futtertransporter mit Wiegeeinrichtung offenbart, wobei dieser einen Mischraum und eine Aufnahmevorrichtung umfasst, mit der vorzugsweise an Flachsilos Silage abgetrennt und in den Mischraum eingebracht wird.

Die EP 1 712 123 B1 offenbart eine Vorrichtung zum Entnehmen und Verarbeiten von Silage für Vieh umfassend eine Aufnahmevorrichtung, die aus einer auf einem Dreharm angeordneten Schneidplatte besteht, und einen Container für entnommene Silage.

In der DE 10 2014 116 882 A1 wird ein Futtertransporter offenbart, der im Wesentlichen einen Mischbehälter, eine Aufnahmevorrichtung, eine Ausbringvorrichtung für Silage und eine Wiegeeinrichtung für die aufzunehmende Silage umfasst.

Weitere Vorrichtungen zur Entnahme von Futter wurden in der US 2 724 481 A, WO 2013/157931 A1, WO 2017/069614 A1, und der NL 2 015 654 B1 beschrieben.

Ein Nachteil der bekannten Futtertransporter ist, dass sie aufgrund ihres hohen Gewichts vorwiegend mittels Dieselmotoren angetrieben werden, die eine hohe Schadstoffbelastung im Stall verursachen. Stickoxide und Feinstaub in Dieselabgasen schädigen die Gesundheit von Mensch und Tier auf vielfache Weise, zudem verursachen Dieselmotoren hohen Treibstoffbedarf und Lärmentwicklung.

Außerdem erweist sich nachteilig, dass bei bekannten Systemen zumeist nur ein Futtertransporter verwendet werden kann, was dazu führt, dass die Bereitstellung von Futter, insbesondere bei großen Viehbeständen, entsprechend viel Zeit in Anspruch nimmt und immer nur ein Futterlager bedient werden kann.

### AUFGABE DER ERFINDUNG

Es ist daher das Ziel der Erfindung eine Vorrichtung zur Entnahme von Futter vorzuschlagen, die die Nachteile des Stands der Technik überwindet und eine rasche und kontinuierliche Futterbereitstellung auch bei Verwendung mehrerer Futterlager ermöglicht, sowie Lärm- und Abgasemissionen reduziert.

### DARSTELLUNG DER ERFINDUNG

Dieses Ziel wird durch die Merkmale von Anspruch 1 erreicht. Anspruch 1 bezieht sich auf eine Vorrichtung zur Entnahme von Futter aus einem Futterlager umfassend eine Trenneinrichtung zum Abtrennen von Futter vom Futterlager, die ein auf einem verfahrbaren Gerüst angeordnetes Trennwerkzeug umfasst, eine mit dem Gerüst mitbewegte Fördereinrichtung zur Förderung von abgetrenntem Futtermaterial von einem an der Trenneinrichtung angeordneten Aufgabebereich der Fördereinrichtung zu einem mit dem Gerüst mitbewegten Abgabebereich der Fördereinrichtung, sowie einen zur Befüllung mit abgetrenntem Futtermaterial in einer Befüllposition im Abgabebereich der Fördereinrichtung vorgesehenen Transportbehälter. Erfindungsgemäß wird hierbei vorgeschlagen, dass der Transportbehälter als ein unabhängig von der verfahrbaren Trenneinrichtung verfahrbarer und zwischen dem Futterlager und einer Futterausgabe selbstfahrend ausgeführter Behälter ausgeführt ist, wobei in der Befüllposition eine Kopplungseinrichtung zur Ausrichtung und Mitführung des Transportbehälters relativ zu dem mit dem Gerüst mitbewegten Abgabebereich der Fördereinrichtung vorgesehen ist.

Die erfindungsgemäße Vorrichtung zur Entnahme von Futter lässt sich wie folgt zusammenfassen: Die Trenneinrichtung und ein oder mehrere Transportbehälter sind abseits der Befüllposition entkoppelt, sodass der Transportbehälter unabhängig von der Trenneinrichtung zwischen Futterlager und Futterausgabe fahren kann. Erfindungsgemäß ist der Transportbehälter dabei zwischen Futterlager und Futterausgabe selbstfahrend ausgeführt, wobei für eine Navigation des Transportbehälters zur Spurführung beispielsweise Leitdrähte, Induktionsschleifen, Magnete, Kameras, Laser-Sensorik oder Ultraschall-Sensorik, oder Positionsbestimmungssysteme wie z.B. GPS verwendet werden können. Zudem können die beschriebenen Spurführungstechniken auch miteinander kombiniert werden. So kann beispielsweise die Navigation des Transportbehälters bis zum Futterlager per GPS oder im Boden des Fahrweges vorgesehene Magnete erfolgen und im Nahbereich des Futterlagers mittels Laser- oder Ultraschall-Sensorik. Der Transportbehälter ist zugleich als Mischbehälter mit einem Mischer für das aufgenommene Futter ausgeführt, wobei die Menge mittels einer Wiegeeinrichtung oder einer Volumenkontrolle überwacht wird. Der Transportbehälter verfügt ferner über eine Austragvorrichtung, über die das aufgenommene Futter am Ort der Futterausgabe dosiert beispielsweise in einem Futtergang abgelegt werden kann. Die Trenneinrichtung zum Abtrennen des Futters vom Futterlager umfasst ein auf einem verfahrbaren Gerüst angeordnetes Trennwerkzeug, sodass sich die Trenneinrichtung mithilfe des verfahrbaren Gerüsts relativ zum Futterlager bewegen kann und somit unterschiedliche Positionen zum Abtrennen des Futters einnehmen kann.

Zum Befüllen des Transportbehälters nimmt der Transportbehälter zunächst eine Befüllposition ein, wobei nach Erreichen der Befüllposition die Trenneinrichtung aktiviert wird. In der Befüllposition richtet die Kopplungseinrichtung den Transportbehälter relativ zum Abgabebereich der Fördereinrichtung so aus, dass das abgetrennte Futter vom Transportbehälter aufgenommen wird. Auf diese Weise kann die Fördereinrichtung mit dem Gerüst mitbewegt werden, wobei sich auch ihr Abgabebereich mitbewegt. Mithilfe der Kopplungseinrichtung wird der Transportbehälter aber mitgeführt, sodass er stets relativ zum Abgabebereich der Fördereinrichtung ausgerichtet bleibt, sich also etwa stets unterhalb eines Abgabebereiches der Fördereinrichtung zur Aufnahme von abgetrenntem Futter befindet. Während die verfahrbare Trenneinrichtung Futter abtrennt, befindet sich der Transportbehälter somit relativ zur Trenneinrichtung in einer vorgegebenen Befüllposition.

Nach dem Befüllvorgang kann sich der Transportbehälter wieder unabhängig von der Trenneinrichtung autonom bewegen. Da die Trenneinrichtung und die Fördereinrichtung aber beim Futterlager verbleiben, kann jene Komponente, die zum Ort der Futterablage bewegt werden muss, nämlich der Transportbehälter, klein und kompakt und vor allem mit wesentlich geringerem Gewicht ausgeführt werden. Der Transportbehälter umfasst im Wesentlichen nur den Mischraum für das abgetrennte Futter und allfällige Misch- und Wiegeeinrichtungen, sowie weitere Steuer- und Antriebseinheiten mit der entsprechenden Sensorik. Auf diese Weise kann der Transportbehälter auch leicht mit einem elektrischen Antrieb zur Vermeidung von Lärm- und Abgasemissionen ausgestattet werden. Freilich kann auch das Gerüst der Trenneinrichtung für seine Bewegung relativ zum Futterlager mit einem elektrischen Antrieb ausgestattet werden, da die Fahrwege des Gerüsts vergleichsweise kurz sind. Zudem kann während des Transports von abgetrenntem Futter zur Futterablage bereits ein weiterer Transportbehälter befüllt werden, da die Trenneinrichtung und die Fördereinrichtung im Flachsilo verbleiben und zur Befüllung eines weiteren Transportbehälters zur Verfügung stehen. Auch die Verwendung mehrerer Futterlager wird erleichtert, da sich die Transportbehälter lediglich zum betreffenden Futterlager begeben müssen, der Trennvorgang und der Transport des abgetrennten Futters in den Transportbehälter aber durch eine entsprechende Steuerung der Trenneinrichtung des betreffenden Futterlagers übernommen werden können.

Bei der Kopplungseinrichtung könnte es sich um eine physische Kopplung des Transportbehälters mit dem Gerüst der Trenneinrichtung handeln, bei der der Transportbehälter während des Befüllvorganges fest mit dem Gerüst verbunden ist, und die nach dem Befüllvorgang wieder gelöst wird. Vorzugsweise wird hingegen vorgeschlagen, dass die Kopplungseinrichtung Abstandssensoren zur Ermittlung eines Abstandes zwischen dem Transportbehälter und der Trenneinrichtung umfasst, sowie eine Steuereinrichtung zur Durchführung der Abstandsmessung und Bewegungssteuerung des Transportbehälters in die Befüllposition.

Dabei kann auch vorgesehen sein, dass eine zusätzliche Warteposition des Transportbehälters vorgesehen ist, sowie eine zumindest in der Warteposition aktivierte Signal- oder Datenverbindung zwischen dem Transportbehälter und der Trenneinrichtung oder einer ihr zugeordneten Überwachungseinrichtung zur Aktivierung der Kopplungseinrichtung. Der Transportbehälter navigiert somit abseits des Futterlagers beispielsweise anhand von Bodenmarkern wie Magneten und dergleichen zunächst autonom zu einer Warteposition im Nahbereich des Futterlagers und nimmt in der Warteposition über die Signal- oder Datenverbindung Kontakt zur Trenneinrichtung oder einer ihr zugeordneten Überwachungseinrichtung auf, die in weiterer Folge beispielsweise feststellt, ob sich ein anderer Transportbehälter zur Befüllung am betreffenden Futterlager befindet. Falls die beim betreffenden Futterlager, das beispielsweise als befahrbarer Flachsilo ausgeführt sein kann, angeordnete Trenneinrichtung zur Verfügung steht, wird die Kopplungseinrichtung aktiviert und der Transportbehälter nimmt selbstfahrend seine Befüllposition ein, indem er etwa in den betreffenden Flachsilo einfährt. Dabei ermitteln die Abstandssensoren einen Abstand zwischen dem Transportbehälter und dem Gerüst der Trenneinrichtung, vergleichen den gemessenen Abstand mit einem vorgegebenen Abstandswert, der der Befüllposition entspricht, und steuern den Antrieb des Transportbehälters bei einer Abweichung entsprechend an. Die Abstandsmessung wird mehrmals wiederholt, bis der gemessene Abstand dem vorgegebenen Abstandswert entspricht. Der Transportbehälter hat somit seine Befüllposition im Abgabebereich der Fördereinrichtung für abgetrenntes Futter eingenommen, sodass das Trennwerkzeug gestartet werden kann. Falls sich das Gerüst der Trenneinrichtung bewegen muss, um etwa eine neue Schicht einer gelagerten Silage abtrennen zu können, halten die Abstandssensoren, die für die Ermittlung des Abstandes zwischen dem Transportbehälter und der Trenneinrichtung vorgesehen sind, die Position des Transportbehälters in Befüllposition relativ zum Gerüst konstant. Nach Beendigung der Befüllung, die etwa durch die Steuereinrichtung nach Vorgabe einer benötigten Materialmenge abgetrennten Futters in Zusammenwirken mit einer Wiegeeinrichtung des Transportbehälters vorgenommen werden kann, stoppt das Trennwerkzeug und der Transportbehälter navigiert autonom aus dem Flachsilo und begibt sich auf seinen Weg zu den Fütterungsstellen.

Falls der Transportbehälter mit einem elektrischen Antrieb versehen ist, kann in einer Warteposition oder in der Befüllposition ein Ladeanschluss für den elektrischen Antrieb des Transportbehälters vorgesehen sein, sodass der Befüllvorgang für das Aufladen eines Stromspeichers des elektrischen Antriebes genutzt werden kann. Der Transportbehälter steht somit permanent für die Bereitstellung von Futter zur Verfügung.

Zur Navigation in die bzw. in der Befüllposition wird vorgeschlagen, dass der Transportbehälter mit Ultraschallsensoren zur Abstandsmessung zwischen dem Transportbehälter und das Futterlager begrenzenden Seitenwänden versehen ist. Die Ultraschallsensoren sind in der Lage Objekte berührungslos zu erkennen und ihre Entfernung zum Sensor zu messen. Um eine autonome Bewegung des Transportbehälters innerhalb eines von Seitenwänden begrenzten Futterlagers zu ermöglichen, werden die Ultraschallsensoren zur Ermittlung des Abstandes zu den Seitenwänden verwendet, sowie zur Navigation des Transportbehälters zwischen den Seitenwänden des Futterlagers, sodass er selbstständig vorgegebene Positionen innerhalb des Futterlagers bis zur oben genannten Warteposition außerhalb des Futterlagers anfahren kann, ab der in weiterer Folge die Navigation beispielsweise mittels der oben genannten Bodenmarker erfolgt. Die berührungslose Abstandsmessung mittels am Transportbehälter angeordneter Ultraschallsensoren ist auch deshalb vorteilhaft, weil somit am Boden oder den Seitenwänden des Futterlagers keine Sensoren befestigt werden müssen. Eine solche Befestigung wäre einerseits deshalb problematisch, weil sie zumindest zeitweise von Futter wie beispielsweise Silage bedeckt wären, das die Sensoren schädigen kann, und andererseits auch schwer möglich, da der Boden und die Seitenwände des Futterlagers aufgrund der chemisch aggressiven Eigenschaften beispielsweise von Silage oft mit einer speziellen Beschichtung versehen sind, die durch eine Befestigung von Sensoren und dergleichen nicht beeinträchtigt werden sollte. Zur Navigation des Transportbehälters kann die oben genannte Steuereinrichtung auch zur Durchführung der Abstandsmessung in Querrichtung zwischen dem Transportbehälter und den Seitenwänden sowie zur Bewegungssteuerung des Transportbehälters zwischen den Seitenwänden ausgelegt sein.

Bei einer bevorzugten Ausführungsvariante der erfindungsgemäßen Vorrichtung zur Entnahme von Futter kann des Weiteren vorgesehen sein, dass das Trennwerkzeug als Fräse ausgeführt ist. Hierfür ist es vorteilhaft eine im Umfangsbereich der Fräse angeordnete Stützeinrichtung zur Schnitttiefenbegrenzung vorzusehen. Die Stützeinrichtung schützt während des Abtrennens beispielsweise von Silage vor einem "Hineinfressen" der Fräse in die Silage, das zu einem ungewollten Abstoppen des Fräsvorganges führen könnte.

Zudem wird vorgeschlagen, dass die Fördereinrichtung als Gebläse ausgeführt ist, wobei der Aufgabebereich als eine im Bereich des Trennwerkzeugs angeordnete Ansaugöffnung des Gebläses ausgeführt ist, und der Abgabebereich als eine oberhalb des Transportbehälters in seiner Befüllposition angeordnete Auswurföffnung des Gebläses ausgeführt ist. Mit Hilfe des Gebläses wird die abgetrennte Silage vom Arbeitsbereich der Fräse schonend in den Transportbehälter befördert. Zusätzlich kann auch auf den Boden gefallene Silage aufgesaugt werden, wodurch sich Bröckelverluste deutlich verringern und die Sauberhaltung der Bodenfläche des Flachlagers erleichtert wird. Das Gebläse kann ferner mit einer flexiblen Rohrführung verwirklicht werden, die bei festgelegter Auswurföffnung Bewegungen des Gerüsts und des Trennwerkzeugs ausgleicht.

Das Trennwerkzeug ist in einer bevorzugten Ausführungsform an einem ersten Gerüstteil des verfahrbaren Gerüsts vertikal bewegbar geführt, wobei der erste Gerüstteil auf einem zweiten Gerüstteil horizontal bewegbar geführt ist. Das Gerüst des Trennwerkzeugs umfasst somit einen vertikalen Aufbau in Form des ersten Gerüstteils, sowie einen horizontalen Bodenteil in Form des zweiten Gerüstteils. Mit Hilfe des ersten Gerüstteils kann das Trennwerkzeug autonom vertikale Bahnen, beispielsweise beginnend von der oberen zur unteren Kante von Silage abtragen, und danach mithilfe des zweiten Gerüstteils in Querrichtung verschoben werden, um eine daneben liegende, vertikale Bahn an Silage abzutragen.

Der zweite Gerüstteil ist ferner vorzugsweise in einer senkrecht zur vertikalen Bewegungsrichtung des Trennwerkzeugs und senkrecht zur horizontalen Bewegungsrichtung des ersten Gerüstteils horizontal bewegbar, beispielsweise mithilfe von Rollen oder Rädern. Mit Hilfe der beiden Gerüstteile kann das Trennwerkzeug somit in einer senkrecht zur Bewegungsebene des Trennwerkzeugs orientierten Richtung bewegt werden, beispielsweise um eine Bewegbarkeit in Längsrichtung eines Flachsilos zu ermöglichen.

In einer weiteren bevorzugten Ausführungsvariante umfasst das Trennwerkzeug einen Leistungssensor zur Erfassung der aufgenommenen Leistung. Der Leistungssensor dient somit der Überwachung und Regelung der Vorschubgeschwindigkeit des Trennwerkzeugs. Wenn es beispielsweise zu einem zu hohen Anstieg der Leistungsaufnahme des Trennwerkzeugs kommt, wird die Vorschubgeschwindigkeit reduziert, bis der Leistungssollwert des Trennwerkzeugs wieder erreicht ist. Sollte der Leistungswert des Trennwerkzeugs abfallen, dann erhöht sich dementsprechend die Vorschubgeschwindigkeit. Diese Steuerung wird ebenfalls von der oben genannten Steuereinrichtung übernommen.

Zudem wird vorgeschlagen, dass das verfahrbare Gerüst mit einer Aufwickeleinrichtung für eine das Futterlager bedeckende Abdeckfolie versehen ist. Um das Futtermittel vor Umwelteinflüssen wie Wind oder Regen zu schützen, ist das Futterlager in der Regel von einer Plane, vorzugsweise einer Siloabdeckplane, oder auch mehrerer Planen abgedeckt, die zudem mit einem Netz überspannt sein können, um die Planen vor einer Beschädigung durch Vögel zu schützen. Diese Plane dient auch zur luftdichten Versiegelung des Futtermittels, um den Gärprozess zu ermöglichen. Um die Folie zu befestigen ist es bekannt sie mit zeilenförmig verteilt angeordneten Sandsäcken zu beschweren. Um Futter aus dem Futterlager entnehmen zu können, müssen zuerst alle Sandsäcke in dem freizulegenden Abschnitt des Fahrsilos entfernt werden. Danach wird die Folie abschnittsweise in Richtung des gelagerten, nicht freizulegenden Futtermittels manuell umgeschlagen oder aufgerollt um Futtermittel freizulegen. Für diesen Vorgang ist in der Regel, je nach Breite des Fahrsilos, die Hilfe einer zweiten Person notwendig, wobei mitunter auch auf das Futterlager geklettert werden muss. Da sich dieser Vorgang äußert arbeitsaufwändig gestaltet und eine mitunter große Zeitdauer für das Umschlagen bzw. Aufwickeln der Folie notwendig ist, wird in der Regel ein größerer Abschnitt des Futtermittels freigelegt, als auf einmal entnommen werden soll. Der verbleibende freigelegte Abschnitt des Futtermittels wird nach der erfolgten Entnahme im Allgemeinen aufgrund des hohen Aufwands nicht wieder abgedeckt und ist demensprechend nicht mehr vor Witterungseinflüssen geschützt. Zudem wird auf eine gute Abdichtung des Randbereiches mithilfe entsprechend nachgeschlichteter Sandsäcke nicht immer geachtet, wodurch die Qualität des Futtermittels leidet. Die vorliegende Erfindung bietet aufgrund des am Futterlager verbleibenden, verfahrbaren Gerüstes die Möglichkeit einer entscheidenden Verbesserung, indem am Gerüst eine Aufwickeleinrichtung für eine das Futterlager bedeckende Abdeckfolie vorgesehen wird. Diese Aufwickeleinrichtung kann so ausgeführt werden, dass sie einerseits ein abdichtendes Aufliegen der Abdeckfolie in den noch unbearbeiteten Bereichen des Futterlagers erlaubt, und andererseits die Abdeckfolie in den zu bearbeitenden Bereichen des Futterlagers aufnimmt und aufwickelt. Dabei kann die Aufwickeleinrichtung auch so ausgeführt werden, dass die aufgenommenen Bereiche der Abdeckfolie sich über das Trennwerkzeug und Teile des verfahrbaren Gerüsts spannen, um auf diese Weise sowohl dem Trennwerkzeug und dem Gerüst, als auch den freigelegten Bereichen des Futterlagers einen Schutz vor Witterungseinflüssen zu bieten. In einfacheren Ausführungen ist die Aufwickeleinrichtung hingegen als eine auf dem Futterlager dichtend aufliegende Rolle ausgeführt. Die Wickelbewegung der Aufwickeleinrichtung wird dabei jeweils mit der Vorschubbewegung des Gerüsts in das Futterlager gekoppelt sein. Diese Vorschubbewegung findet im Rahmen der vorliegenden Erfindung automatisiert statt, sodass der vorzunehmende Vorschub des Gerüsts auch für die Steuerung der Wickelbewegung der Aufwickeleinrichtung herangezogen werden kann.

Das am Futterlager verbleibende, verfahrbare Gerüst bietet ferner die Möglichkeit zusätzliche Komponenten zu befestigen, um die Qualität des abzutrennenden Futters bewerten zu können. So wird etwa vorgeschlagen, dass das verfahrbare Gerüst mit einem Temperaturfühler zur berührungslosen Messung der Futtermitteltemperatur des Futterlagers versehen ist. Der Temperaturfühler kann mit einer Überwachungseinrichtung gekoppelt sein, die die gemessene Futtermitteltemperatur überwacht und ein Warnsignal generiert, falls die Futtermitteltemperatur einen zulässigen Wertebereich überschreitet. Eine zu hohe Futtermitteltemperatur kann nämlich ein Hinweis auf eine qualitative Beeinträchtigung des Futtermittels sein, dem unbedingt nachgegangen werden sollte. Freilich eignet sich auch ein zu kaltes Futtermittel nicht zur Verfütterung an Tiere.

Zudem kann vorgesehen sein, dass das verfahrbare Gerüst mit einer Kamera versehen ist, die mit einer Bildauswerteeinheit zur Erkennung optisch sichtbarer Qualitätsmängel des abzutrennenden Futters gekoppelt ist. Ein solcher optisch sichtbarer Qualitätsmangel kann etwa die Bildung von Schimmel sein, der mittels automatisierter Bilderkennung von entsprechender Analysesoftware leicht zu erkennen ist. Falls ein Qualitätsmangel von der Bildauswerteeinheit erkannt wird, kann wiederum ein Warnsignal generiert werden. Die Kamera ist dabei selbstredend auf die dem Gerüst zugewandte Seite des Futterlagers gerichtet und erfasst diese Seite des Futterlagers zur Gänze oder zumindest abschnittsweise.

Des Weiteren kann das verfahrbare Gerüst mit Sensoren oder Kameras zur Detektion von Menschen oder Tieren im Betriebsbereich der Trenneinrichtung und der Fördereinrichtung versehen sein. Falls die Anwesenheit von Menschen oder Tieren detektiert wird, kann etwa ein Warnsignal generiert werden, oder sofort eine Abschaltung des Trennwerkzeugs vorgenommen werden. Sensoren dieser Art erhöhen die Sicherheit der erfindungsgemäßen Vorrichtung, die im praktischen Betrieb immerhin vollständig automatisiert arbeiten soll.

### KURZE BESCHREIBUNG DER FIGUREN

Die Erfindung wird in weiterer Folge anhand eines Ausführungsbeispiels mithilfe der beiliegenden Zeichnungen näher erläutert. Hierbei zeigen die
- Fig. 1: eine axonometrische Darstellung einer Ausführungsform der erfindungsgemäßen Vorrichtung zur Entnahme von Silage,
- Fig. 2: eine Ansicht auf die erfindungsgemäße Vorrichtung der Fig. 1 zur Entnahme der Silage von oben gesehen,
- Fig. 3: eine Vorderansicht der erfindungsgemäßen Vorrichtung der Fig. 1 zur Entnahme der Silage, und die
- Fig. 4: eine Seitenansicht der erfindungsgemäßen Vorrichtung der Fig. 1 zur Entnahme der Silage.

### WEGE ZUR AUSFÜHRUNG DER ERFINDUNG

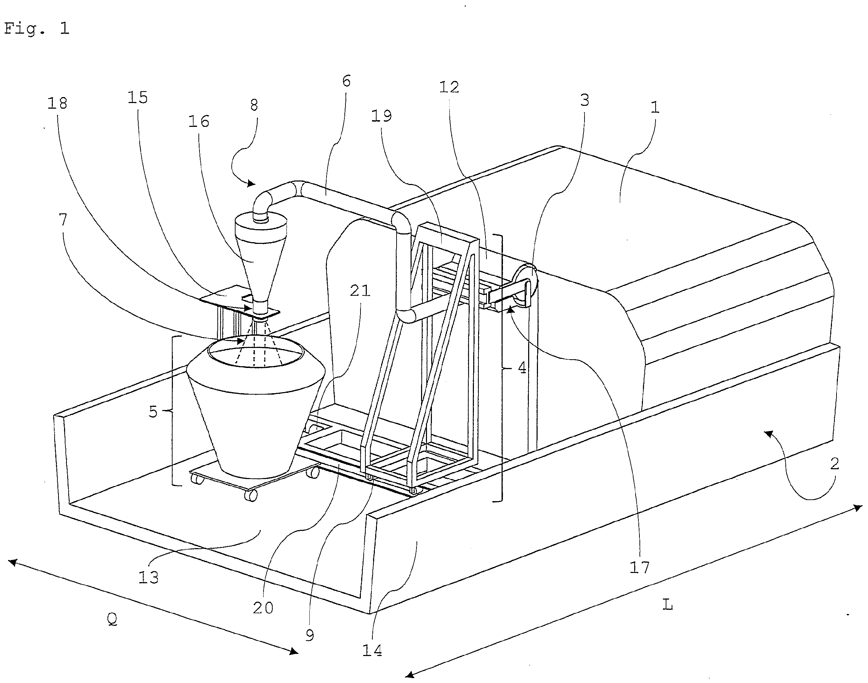

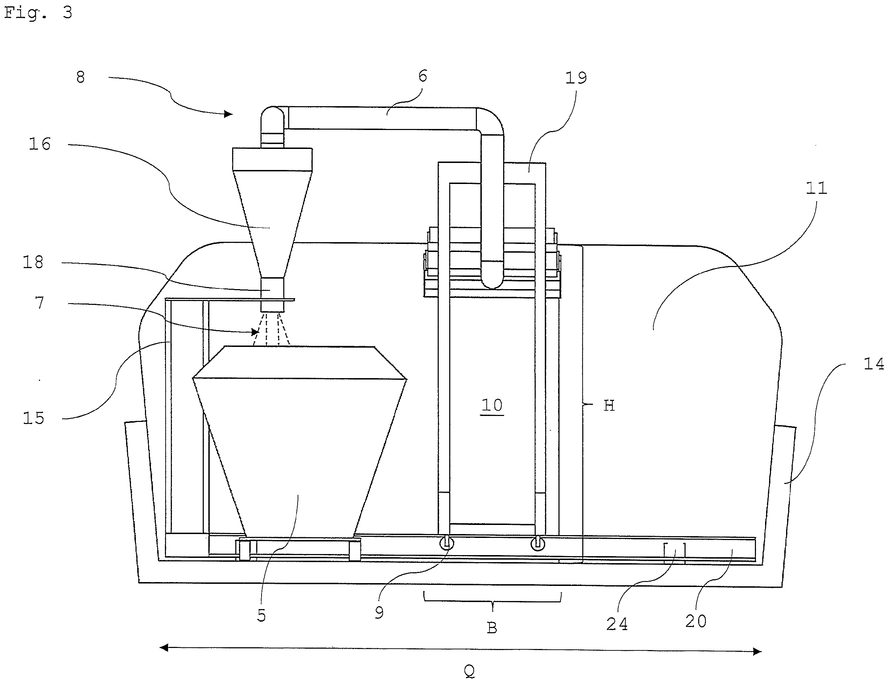

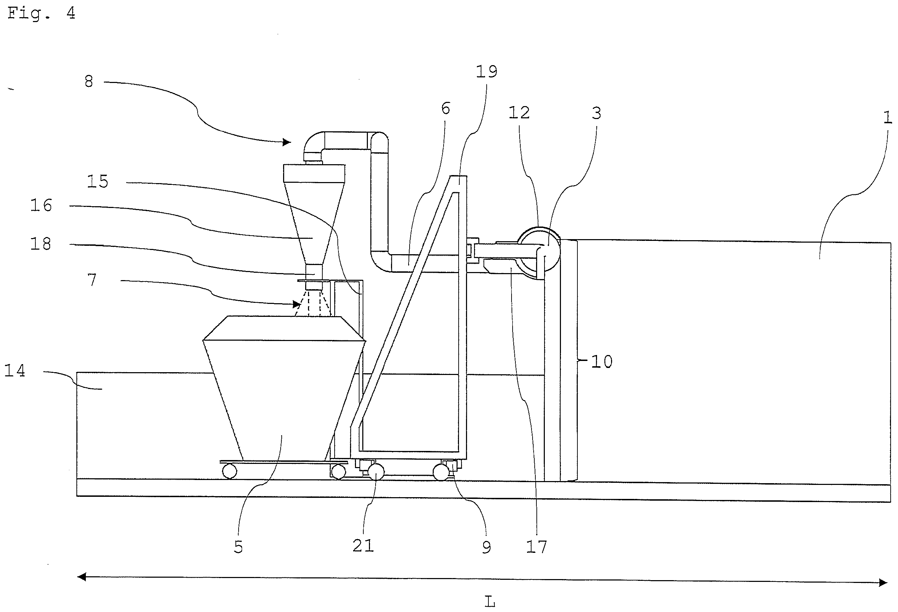

Die Figuren 1 - 4 zeigen eine erfindungsgemäße Vorrichtung zur Entnahme von Futter aus einem Futterlager 1, im gezeigten Ausführungsbeispiel etwa Silage, wobei das Futter in einem Flachsilo 2 umfassend einen befahrbaren Boden 13 und Seitenwände 14 gelagert ist. Die Vorrichtung zur Entnahme von Futter umfasst ein als Fräse ausgeführtes Trennwerkzeug 3 zum Abtrennen der Silage, wobei die Fräse auf einem Gerüst 4 angeordnet ist. Das Gerüst 4 umfasst im gezeigten Ausführungsbeispiel zwei Teile, wobei ein erster Gerüstteil 19 mit Hilfe von Rollen 9 auf einem zweiten Gerüstteil 20 in Querrichtung Q des Flachsilos bewegbar geführt ist. Der zweite Gerüstteil 20 ist wiederum mit Rollen 21 in Längsrichtung L des Flachsilos 2 bewegbar. Beide Gerüstteile 19, 20 werden mit einem elektrischen Motor angetrieben.

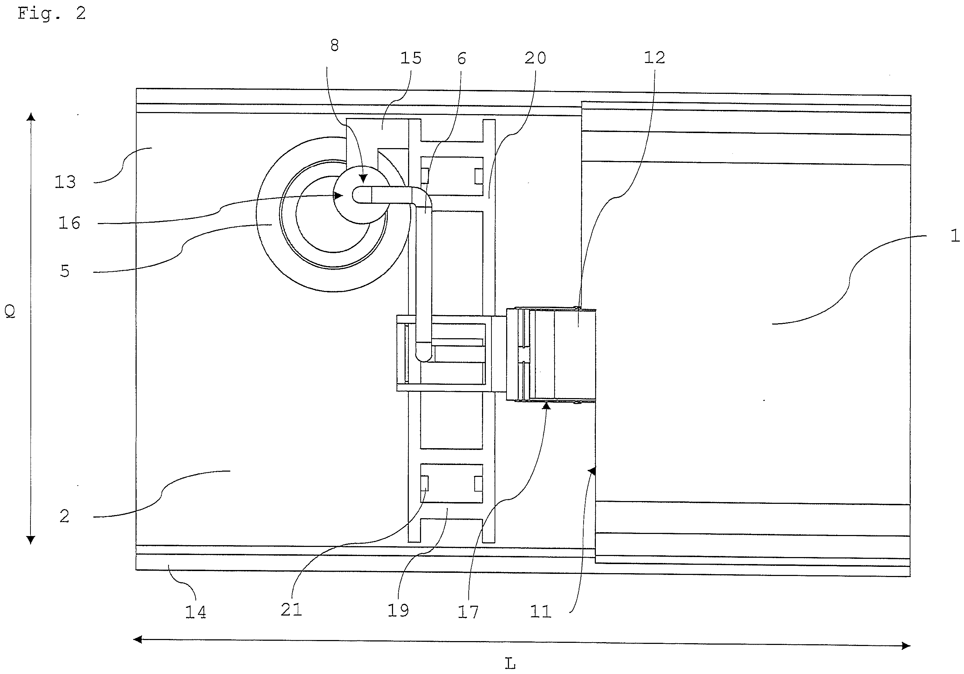

Die Fräse ist am ersten Gerüstteil 19 vertikal bewegbar geführt und umfasst einen Leistungssensor zur Erfassung der aufgenommenen Leistung, wobei der Leistungssensor der Überwachung und Regelung der Vorschubgeschwindigkeit der Fräse dient. Somit kann die Fräse autonom vertikale Bahnen 10 mit Höhe H (siehe Fig. 2), die der Höhe der Silage entspricht, und einer Breite B, die der Breite der Fräse entspricht, beginnend von der oberen oder der unteren Kante der Silage von der Silage abtragen. In Figur 2 ist erkennbar, dass die Fräse in dem dargestellten Ausführungsbeispiel auf der rechten Seite der Schneidfläche 11 mit dem Abtragen der Silage beginnt und dann in weiterer Folge mehrere nebeneinanderliegende Bahnen 10 der Silage abtrennt, solange bis die Fräse an der linken Seite der Schneidfläche 11 ankommt. In weiterer Folge trennt die Fräse nun beginnend auf der linken Seite nebeneinanderliegende Bahnen 10 der Silage ab, bis die Fräse wiederum auf der rechten Seite der Schneidfläche 11 angekommen ist. Alternativ kann die Fräse nach Erreichen der linken Seite auch zur rechten Seite verfahren werden, um dort mit einem neuerlichen Schichtabtrag zu beginnen.

Sobald die Fräse eine Bahn 10 der Silage, wie oben beschrieben, abgetragen hat, entfernt sich der zweite Gerüstteil 20 in Längsrichtung L von der Schneidfläche 11 der Silage, sodass die Fräse die Schneidfläche 11 nicht mehr berührt. Anschließend verfährt die Fräse mit Hilfe des ersten Gerüstteils 19 in Querrichtung Q um einen Abstand, der der Breite der Fräse entspricht. Sobald diese Position erreicht wurde, bewegt sich wiederum der zweite Gerüstteil 20 in Längsrichtung L in Richtung der Schneidfläche 11, bis die Fräse eine vorgegeben Schnitttiefe erreicht hat und die Fräse beginnt eine weitere Bahn 10 der Silage abzutragen.

Weiters umfasst die Fräse eine Stützeinrichtung 12, die im Umfangsbereich der Fräse angeordnet und zum Abstützen der Fräse an der Schneidfläche 11 der Silage vorgesehen ist. Durch Verwendung der Stützeinrichtung 12 wird ein "Hineinfressen" der Fräse in die Silage verhindert, was zu einem ungewollten Abstoppen des Fräsvorganges führen könnte.

Die Vorrichtung zur Entnahme von Futter umfasst weiters einen oder mehrere elektrisch betriebene Transportbehälter 5 zur Aufnahme der von der Fräse abgetrennten Silage. Für die Navigation der Transportbehälter 5 außerhalb des Flachsilos 2 können beispielsweise magnetische Bodenmarker verwendet werden. Innerhalb des Flachsilos 2 navigieren die Transportbehälter 5 mittels Ultraschall- und Abstandssensoren und sind so in der Lage, Objekte berührungslos zu erkennen und ihre Entfernung zum Sensor zu messen, wodurch sich die Transportbehälter 5 innerhalb des Flachsilos 2 autonom bewegen können.

Außerdem umfasst die Vorrichtung eine Fördereinrichtung 8 zur Förderung des vom Trennwerkzeug 3 abgetrennten Futters in den Transportbehälter 5. Im vorliegenden Fall wird die Fördereinrichtung 8 aus einem Gebläse 16 sowie einem Schlauch 6 gebildet und weist eine Ansaugöffnung 17 im Nahbereich der Fräse und eine Auswurföffnung 18 auf. Die Befüllposition des Transportbehälters 5 befindet sich direkt unterhalb der Auswurföffnung 18. Im vorliegenden Ausführungsbeispiel ist die Auswurföffnung 18 starr mittels einer Halterung 15 mit dem zweiten Gerüstteil 20 verbunden. Die Befüllposition ändert sich somit nur in Längsrichtung L bei fortschreitender Abtragung der Silage. Der Schlauch 6 ist dabei flexibel, sodass der Schlauch 6 trotz der fixierten Auswurföffnung 18 die Bewegung der Fräse entlang der gesamten Breite der Silage ermöglicht. Mit Hilfe des Gebläses 16 wird abgetrenntes Futtermaterial 7 vom Bereich der Schneidfläche 11 der Fräse über den Schlauch 6 in den Transportbehälter 5 befördert.

Ein neuer autonomer Fütterungsablauf beginnt, indem der Transportbehälter 5 mittels der oben beschriebenen magnetischen Bodenmarker zum Flachsilo 2 navigiert. Sobald sich der Transportbehälter 5 vor dem Flachsilo 2 etwa in einer vorgegebenen Warteposition befindet, sendet der Transportbehälter 5 über eine Signal- oder Datenverbindung ein Meldesignal an die Trenneinrichtung oder eine ihr zugeordnete Überwachungseinrichtung, die in weiterer Folge prüft, ob der Transportbehälter 5 in den Flachsilo 2 einfahren darf. Falls die Trenneinrichtung oder eine ihr zugeordnete Überwachungseinrichtung eine Freigabe erteilt, da sich derzeit kein anderer Transportbehälter 5 in Befüllposition befindet, fährt der Transportbehälter 5 in den Flachsilo 2 ein. Sollte sich ein anderer Transportbehälter 5 in Befüllposition befinden, so erhält der anfragende Transportbehälter 5 einen Wartebefehl von der Trenneinrichtung oder einer ihr zugeordneten Überwachungseinrichtung und verbleibt in der Warteposition vor dem Flachsilo 2, bis der andere Transportbehälter 5 mit abgetrenntem Futter 7 befüllt wurde und den Flachsilo 2 verlassen hat. Sobald der wartende Transportbehälter 5 den Fahrbefehl von der Trenneinrichtung oder einer ihr zugeordneten Überwachungseinrichtung erhält, fährt er in den Flachsilo 2 ein und navigiert mittels der oben beschriebenen Ultraschall- und Abstandssensoren zu der Befüllposition, die sich unterhalb der starr mit dem zweiten Gerüstteil 20 verbundenen Auswurföffnung 18 befindet.

Sobald der Transportbehälter 5 die Befüllposition erreicht hat, sendet der Transportbehälter 5 ein Startsignal an die Trenneinrichtung oder eine ihr zugeordnete Überwachungseinrichtung. Die Trenneinrichtung oder eine ihr zugeordnete Überwachungseinrichtung sendet daraufhin ein Startsignal an die Trenneinrichtung, woraufhin sich der zweite Gerüstteil 20 in Längsrichtung L in Richtung der Schneidfläche 11 bewegt, bis die Fräse eine vorgegebene Schnitttiefe erreicht hat. Die Fräse beginnt die Silage abzutrennen und der Transportbehälter 5 wird über die Fördereinrichtung 8 mit abgetrenntem Futtermaterial 7 befüllt, wobei die Menge des abgetrennten Futtermaterials 7 mittels einer Wiegeeinrichtung überwacht wird. Nachdem der Transportbehälter 5 wie vorgegeben befüllt wurde, sendet die Wiegeeinrichtung ein Stoppsignal an die Trenneinrichtung oder eine ihr zugeordnete Überwachungseinrichtung. Die Trenneinrichtung oder eine ihr zugeordnete Überwachungseinrichtung sendet in weiterer Folge ein Stoppsignal an die Trenneinrichtung und die Fräse beendet das Abtrennen der Silage. Daraufhin wird die Fräse vom zweiten Gerüstteil 20 in Längsrichtung L von der Schneidfläche 11 entfernt und der Transportbehälter 5 verlässt die Befüllposition. Mit Hilfe der Ultraschall- und Abstandssensoren bewegt sich der Transportbehälter 5 aus dem Flachsilo 2 und navigiert außerhalb des Flachsilos 2 mit Hilfe der magnetischen Bodenmarker zur Fütterungsstelle.

Somit sind entscheidende Vorteile der erfindungsgemäßen Vorrichtung zur Entnahme von Futter, dass einerseits mehrere Transportbehälter 5 zum Einsatz kommen können, wodurch auch mehrere Flachsilos 2 gleichzeitig bedient werden können und eine kontinuierliche Futterbereitstellung sichergestellt werden kann, und dass andererseits die Trenneinrichtung und der Transportbehälter 5 entkoppelt sind, wodurch aufgrund der Gewichtsreduktion Elektromotoren zum Einsatz kommen können. Weiters wird bei Verwendung mehrerer Transportbehälter 5 die Stillstandzeit der Trenneinrichtung deutlich reduziert.

### BEZUGSZEICHENLISTE

- 1.: Futterlager
- 2.: Flachsilo
- 3.: Trennwerkzeug
- 4.: Gerüst
- 5.: Transportbehälter
- 6.: Schlauch
- 7.: Abgetrenntes Futtermaterial
- 8.: Fördereinrichtung
- 9.: Rollen des ersten Gerüstteils
- 10.: vertikale Bahn
- 11.: Schneidfläche
- 12.: Stützeinrichtung
- 13.: Boden
- 14.: Seitenwände
- 15.: Halterung
- 16.: Gebläse
- 17.: Ansaugöffnung
- 18.: Auswurföffnung
- 19.: Erster Gerüstteil
- 20.: Zweiter Gerüstteil
- 21.: Rollen des zweiten Gerüstteils
- L: Längsrichtung
- Q: Querrichtung
- H: Höhe
- B: Breite

## Patentansprüche

1. Vorrichtung zur Entnahme von Futter aus einem Futterlager (1) umfassend eine Trenneinrichtung zum Abtrennen von Futter vom Futterlager (1), die ein auf einem verfahrbaren Gerüst (4) angeordnetes Trennwerkzeug (3) umfasst, eine mit dem Gerüst (4) mitbewegte Fördereinrichtung (8) zur Förderung von abgetrenntem Futtermaterial (7) von einem an der Trenneinrichtung angeordneten Aufgabebereich der Fördereinrichtung (8) zu einem mit dem Gerüst (4) mitbewegten Abgabebereich der Fördereinrichtung (8), sowie einen zur Befüllung mit abgetrenntem Futtermaterial in einer Befüllposition im Abgabebereich der Fördereinrichtung (8) vorgesehenen Transportbehälter (5), **dadurch gekennzeichnet, dass** der Transportbehälter (5) als ein unabhängig von der verfahrbaren Trenneinrichtung verfahrbarer und zwischen dem Futterlager (1) und einer Futterausgabe selbstfahrend ausgeführter Behälter ausgeführt ist, wobei in der Befüllposition eine Kopplungseinrichtung zur Ausrichtung und Mitführung des Transportbehälters (5) relativ zu dem mit dem Gerüst (4) mitbewegten Abgabebereich der Fördereinrichtung (8) vorgesehen ist.

2. Vorrichtung nach Anspruch 1, **dadurch gekennzeichnet, dass** die Kopplungseinrichtung Abstandssensoren zur Ermittlung eines Abstandes zwischen dem Transportbehälter (5) und der Trenneinrichtung umfasst, sowie eine Steuereinrichtung zur Durchführung der Abstandsmessung und Bewegungssteuerung des Transportbehälters (5) in die Befüllposition.

3. Vorrichtung nach Anspruch 1 oder 2, **dadurch gekennzeichnet, dass** eine zusätzliche Warteposition des Transportbehälters (5) vorgesehen ist, sowie eine zumindest in der Warteposition aktivierte Signal- oder Datenverbindung zwischen dem Transportbehälter (5) und der Trenneinrichtung oder einer ihr zugeordneten Überwachungseinrichtung zur Aktivierung der Kopplungseinrichtung.

4. Vorrichtung nach einem der Ansprüche 1 bis 3, **dadurch gekennzeichnet, dass** der Transportbehälter (5) mit Ultraschallsensoren zur Abstandsmessung zwischen dem Transportbehälter (5) und das Futterlager (1) begrenzenden Seitenwänden (14) versehen ist.

5. Vorrichtung nach einem der Ansprüche 1 bis 4, **dadurch gekennzeichnet, dass** das Trennwerkzeug (3) als Fräse ausgeführt ist.

6. Vorrichtung nach einem Anspruch 5, **dadurch gekennzeichnet, dass** eine im Umfangsbereich der Fräse angeordnete Stützeinrichtung (12) zur Schnitttiefenbegrenzung vorgesehen ist.

7. Vorrichtung nach einem der Ansprüche 1 bis 6, **dadurch gekennzeichnet, dass** die Fördereinrichtung (8) als Gebläse (16) ausgeführt ist, wobei der Aufgabebereich als eine im Bereich des Trennwerkzeugs (3) angeordnete Ansaugöffnung (17) des Gebläses (16) ausgeführt ist, und der Abgabebereich als eine oberhalb des Transportbehälters (5) in seiner Befüllposition angeordnete Auswurföffnung (18) des Gebläses (16) ausgeführt ist.

8. Vorrichtung nach einem der Ansprüche 1 bis 7, **dadurch gekennzeichnet, dass** das Trennwerkzeug (3) an einem ersten Gerüstteil (19) des verfahrbaren Gerüsts (4) vertikal bewegbar geführt ist, wobei der erste Gerüstteil (19) auf einem zweiten Gerüstteil (20) horizontal bewegbar geführt ist.

9. Vorrichtung nach Anspruch 8, **dadurch gekennzeichnet, dass** der zweite Gerüstteil (20) in einer senkrecht zur vertikalen Bewegungsrichtung des Trennwerkzeugs (3) und senkrecht zur horizontalen Bewegungsrichtung des ersten Gerüstteils (19) horizontal bewegbar ist.

10. Vorrichtung nach einem der Ansprüche 1 bis 9, **dadurch gekennzeichnet, dass** das Trennwerkzeug (3) einen Leistungssensor zur Erfassung der aufgenommenen Leistung umfasst.

11. Vorrichtung nach einem der Ansprüche 1 bis 10, **dadurch gekennzeichnet, dass** das verfahrbare Gerüst (4) mit einer Aufwickeleinrichtung für eine das Futterlager (1) bedeckende Abdeckfolie versehen ist.

12. Vorrichtung nach einem der Ansprüche 1 bis 11, **dadurch gekennzeichnet, dass** das verfahrbare Gerüst (4) mit einem Temperaturfühler zur berührungslosen Messung der Futtermitteltemperatur des Futterlagers (1) versehen ist.

13. Vorrichtung nach einem der Ansprüche 1 bis 12, **dadurch gekennzeichnet, dass** das verfahrbare Gerüst (4) mit einer Kamera versehen ist, die mit einer Bildauswerteeinheit zur Erkennung optisch sichtbarer Qualitätsmängel des abzutrennenden Futters gekoppelt ist.

14. Vorrichtung nach einem der Ansprüche 1 bis 13, **dadurch gekennzeichnet, dass** das verfahrbare Gerüst (4) mit Sensoren oder Kameras zur Detektion von Menschen oder Tieren im Betriebsbereich der Trenneinrichtung und der Fördereinrichtung (8) versehen ist.

## Claims

1. A device for removing feed from a feed store (1), comprising a separating unit for separating feed from the feed store (1), which comprises a separating tool (3) arranged on a movable framework (4), a conveyor unit (8) moved along with the framework (4) for conveying separated feed material (7) from a supply region of the conveyor unit (8) arranged on the separating unit to a discharge region of the conveyor unit (8) moved along with the framework (4), and also a transport container (5) provided for filling with separated feed material in a filling position in the discharge region of the conveyor unit (8),
**characterized in that** the transport container (5) is embodied as a container movable independently from the movable separating unit and self-propelled between the feed store (1) and a feed supply, wherein in the filling position, a coupling unit is provided for aligning and carrying along the transport container (5) in relation to the discharge region of the conveyor unit (8) moved along with the framework (4).

2. The device according to Claim 1, **characterized in that** the coupling unit comprises distance sensors for ascertaining a distance between the transport container (5) and the separating unit, and a control unit for carrying out the distance measurement and movement control of the transport container (5) into the filling position.

3. The device according to Claim 1 or 2, **characterized in that** an additional waiting position of the transport container (5) is provided, as well as a signal connection or data connection, which is activated at least in the waiting position, between the transport container (5) and the separating unit or a monitoring unit associated with it for activating the coupling unit.

4. The device according to any one of Claims 1 to 3, **characterized in that** the transport container (5) is provided with ultrasonic sensors for measuring the distance between the transport container (5) and side walls (14) delimiting the food store (1).

5. The device according to any one of Claims 1 to 4, **characterized in that** the separating tool (3) is embodied as a milling machine.

6. The device according to Claim 5, **characterized in that** a support unit (12) arranged in the circumferential region of the milling machine is provided for limiting the cutting depth.

7. The device according to any one of Claims 1 to 6, **characterized in that** the conveyor unit (8) is embodied as a fan (16), wherein the supply region is embodied as a suction opening (17) of the fan (16) arranged in the region of the separating tool (3), and the discharge region is embodied as an ejection opening (18) of the fan (16) arranged above the transport container (5) in its filling position.

8. The device according to any one of Claims 1 to 7, **characterized in that** the separating tool (3) is guided so it is vertically movable on a first framework part (19) of the movable frame (4), wherein the first framework part (19) is guided so it is horizontally movable on a second framework part (20).

9. The device according to Claim 8, **characterized in that** the second framework part (20) is horizontally movable in a movement direction of the separating tool (3) perpendicular to the vertical and perpendicular to the horizontal movement direction of the first framework tool (19).

10. The device according to any one of Claims 1 to 9, **characterized in that** the separating tool (3) comprises a power sensor for detecting the consumed power.

11. The device according to any one of Claims 1 to 10, **characterized in that** the movable framework (4) is provided with a winding unit for a cover film covering the feed store (1).

12. The device according to any one of Claims 1 to 11, **characterized in that** the movable framework (4) is provided with a temperature probe for contactless measurement of the feed temperature of the feed store (1).

13. The device according to any one of Claims 1 to 12, **characterized in that** the movable framework (4) is provided with a camera, which is coupled to an image analysis unit for recognizing optically visible quality deficiencies of the feed to be separated.

14. The device according to any one of Claims 1 to 13, **characterized in that** the movable framework (4) is provided with sensors or cameras for detecting humans or animals in the operating region of the separating unit and the conveyor unit (8).

## Revendications

1. Dispositif pour prélever du fourrage d'un magasin à fourrage (1), comprenant un moyen de séparation pour séparer le fourrage du magasin à fourrage (1), qui comprend un outil de séparation (3) disposé sur un bâti déplaçable (4), un moyen de transport (8) déplacé avec le bâti (4) pour transporter la matière fourragère séparée (7) d'une zone de chargement du moyen de transport (8) qui est disposée sur le moyen de séparation vers une zone de déchargement du moyen de transport (8) qui est déplacée avec le bâti (4), ainsi qu'un conteneur de transport (5) prévu pour être rempli de la matière fourragère séparée dans une position de remplissage dans la zone de déchargement du moyen de transport (8), **caractérisé en ce que** le conteneur de transport (5) est réalisé sous la forme d'un conteneur déplaçable indépendamment du moyen de séparation déplaçable et déplaçable de manière autonome entre le magasin à fourrage (1) et un déchargement de fourrage, dans lequel, dans la position de remplissage, un moyen d'accouplement est prévu pour orienter et entraîner le conteneur de transport (5) par rapport à la zone de déchargement du moyen de transport (8) qui est déplacée avec le bâti (4).

2. Dispositif selon la revendication 1, **caractérisé en ce que** le moyen d'accouplement comprend des capteurs de distance pour déterminer une distance entre le conteneur de transport (5) et le moyen de séparation, ainsi qu'un moyen de commande pour effectuer la mesure de distance et la commande de déplacement du conteneur de transport (5) dans la position de remplissage.

3. Dispositif selon la revendication 1 ou 2, **caractérisé en ce qu'**une position d'attente supplémentaire du conteneur de transport (5) est prévue, ainsi qu'une liaison de signaux ou de données, activée au moins dans la position d'attente, entre le conteneur de transport (5) et le moyen de séparation ou un moyen de surveillance qui lui est associé pour activer le moyen d'accouplement.

4. Dispositif selon l'une des revendications 1 à 3, **caractérisé en ce que** le conteneur de transport (5) est muni de capteurs à ultrasons pour mesurer la distance entre le conteneur de transport (5) et des parois latérales (14) délimitant le magasin à fourrage (1).

5. Dispositif selon l'une des revendications 1 à 4, **caractérisé en ce que** l'outil de séparation (3) est réalisé sous la forme d'une fraise.

6. Dispositif selon la revendication 5, **caractérisé en ce qu'**un moyen d'appui (12) disposé dans la zone périphérique de la fraise est prévu pour limiter la profondeur de coupe.

7. Dispositif selon l'une des revendications 1 à 6, **caractérisé en ce que** le moyen de transport (8) est réalisé sous la forme d'une soufflante (16), dans lequel la zone de chargement est réalisée sous la forme d'une ouverture d'aspiration (17) de la soufflante (16) disposée dans la zone de l'outil de séparation (3), et la zone de déchargement est réalisée sous la forme d'une ouverture d'éjection (18) de la soufflante (16) disposée au-dessus du conteneur de transport (5) dans sa position de remplissage.

8. Dispositif selon l'une des revendications 1 à 7, **caractérisé en ce que** l'outil de séparation (3) est guidé de manière mobile verticalement sur une première partie de bâti (19) du bâti déplaçable (4), dans lequel la première partie de bâti (19) est guidée de manière mobile horizontalement sur une deuxième partie de bâti (20).

9. Dispositif selon la revendication 8, **caractérisé en ce que** la deuxième partie de bâti (20) est mobile horizontalement dans une direction perpendiculaire à la direction de déplacement verticale de l'outil de séparation (3) et perpendiculaire à la direction de déplacement horizontale de la première partie de bâti (19).

10. Dispositif selon l'une des revendications 1 à 9, **caractérisé en ce que** l'outil de séparation (3) comprend un capteur de puissance pour détecter la puissance consommée.

11. Dispositif selon l'une des revendications 1 à 10, **caractérisé en ce que** le bâti déplaçable (4) est muni d'un moyen d'enroulement pour un film de protection recouvrant le magasin à fourrage (1).

12. Dispositif selon l'une des revendications 1 à 11, **caractérisé en ce que** le bâti déplaçable (4) est muni d'une sonde de température pour mesurer sans contact la température du fourrage du magasin à fourrage (1).

13. Dispositif selon l'une des revendications 1 à 12, **caractérisé en ce que** le bâti déplaçable (4) est muni d'une caméra qui est couplée à une unité d'évaluation d'image pour détecter des défauts de qualité optiquement visibles du fourrage à séparer.

14. Dispositif selon l'une des revendications 1 à 13, **caractérisé en ce que** le bâti déplaçable (4) est muni de capteurs ou de caméras pour détecter des humains ou des animaux dans la zone de fonctionnement du moyen de séparation et du moyen de transport (8).
